Europäisches Patentamt

European Patent Office

Office européen des brevets

(11) Veröffentlichungsnummer: **0 248 950 B1**

(12) **EUROPÄISCHE PATENTSCHRIFT**

(45) Veröffentlichungstag der Patentschrift:
20.12.89

(21) Anmeldenummer: 86201026.1

(22) Anmeldetag: 13.06.86

(51) Int. Cl.⁴: **F 16 L 59/14**

(54) Verfahren für die Isolierung von Rohrleitungen.

(43) Veröffentlichungstag der Anmeldung:
16.12.87 Patentblatt 87/51

(45) Bekanntmachung des Hinweises auf die Patenterteilung:
20.12.89 Patentblatt 89/51

(84) Benannte Vertragsstaaten:
AT CH DE FR GB IT LI LU SE

(56) Entgegenhaltungen:
DE-A- 2 716 078
DE-B- 2 039 272
DE-B- 2 448 795
NL-A- 8 400 821

(73) Patentinhaber: W.A. Nijkamp Beheer B.V.,
Wieringenstraat 73-75, NL-4817 AN Breda (NL)

(72) Erfinder: van Nies, Gijsbertus Johannes Nicolaas,
Wieringenstraat 75, NL-4817 AN Breda (NL)

(74) Vertreter: Siemens, Andreas Meinhard Ernest, Dipl.-Ing.,
SIEMENS & CIE. Roskam 8, NL-4813 GZ Breda (NL)

ACTORUM AG

## Beschreibung

Die vorliegende Erfindung bezieht sich auf ein Verfahren für die Isolierung von unterirdisch zu verlegenden Metallrohren gegen Wärmeverlust, Beschädigung und Angriff durch Korrosion infolge von Feuchtigkeit, sauere oder alkalische Bodenbestandteile und von Wanderströmen gemäss dem ersten Teil von Patentanspruch 1.

Beim Verlegen von Rohrleitungen im Boden ergeben sich Probleme bezüglich des gleichzeitigen Isolierens und Schützens gegen Rohrkorrosion aller Art.

Der Wärmeverlust muss auf ein Minimum beschränkt werden, und Dauerhaftigkeit des Ganzen ist von erheblicher Bedeutung.

Es mussten daher ein Isolierungsmaterial und ein Verfahren für das Anbringen entwickelt werden, wobei das Material nicht wasserdurchlässig ist und homogen bleibt, so dass keine Rissbildung entsteht, und die Flexibilität des gesamten Systems erhalten bleibt, um Anpassung an das Setzen zu erhalten.

Dazu musste eine gute Wärmedämmung verbürgt sein.

Ausserdem musste der Möglichkeit Rechnung getragen werden, die Leitungen in sehr schlechten Bodenschichten, wie Moorschichten, sowie in Grundwasser zu verlegen.

Beständigkeit gegen Alterungszerfall ist für diese Projekte von sehr grosser Wichtigkeit.

Es ist bereits eine Verkleidungstechnik für Metallrohre aus NL-A-7509566 bekannt, worin ein Verfahren für das Anbringen wärmeisolierender Verkleidungsschichten für unterirdisch zu verlegende Rohrleitungen und eine nach diesem Verfahren hergestellte wärmeisolierende Rohrleitung beschrieben ist, die dadurch gekennzeichnet ist, dass man ein Verkleidungsgemisch aus Bitumen und Zuschlagstoffen in geschmolzenem Zustand um die Rohrleitung giesst, wobei das Verkleidungsgemisch aus 75 bis 95 Gew.-% geblasenem Bitumen und 25 bis 5 Gew.-% körner- und pulverförmigen Kautschuks besteht. Durch die Kautschukkörner und das Pulver konnte eine gewisse Elastizität der Rohrverkleidung erreicht werden, wodurch eine befriedigende Qualität mit gleichbleibender Isolierung erhalten werden konnte.

Die Verwendung isolierter Leitungen für den Transport von allerhand warmen Stoffen nimmt ständig zu, nicht nur für Fernwärmeversorgung von Wohnungsblocks, doch auch für Zwecke wie Rückgewinnung von Stoffen und Energie, sowie für Leitungen, die Teile von Netzen in Anlagen der chemischen Industrie und von Energieproduzenten sind, und auch für das Verpumpen von Roherdöl (crude) und von Heizöl, die bei einer Temperatur von etwa 80°C flüssig genug sind. In DE-A-2 716 078 wurde eine Isolier- und Einbettungsmasse, für unterirdisch zu verlegende Rohrleitungen, beschrieben, welche Bitumen und mehr als 50 Vol.-% grobkörniges Schaumglas, eventuell mit einem Gehalt an Bimsteinkörnern, enthält. Ein Schutzmantel soll dabei das Einfüllen der Körner durch Herabsetzung der Gleitreibung erleichtern.

Die Leitungen werden länger und sie müssen oft in Erdschichten verlegt werden, die durch agressive Flüssigkeiten angegriffen sind, während die Temperaturen der transportierten Stoffe oft höher als früher sind oder variieren, wodurch die Isolationen insbesondere nach länger Zeit immer mehr bedroht werden können.

Zudem werden durch den stets zunehmenden Schwerlastverkehr höhere Anforderungen an den mechanischen Widerstand der Röhren und ihrer Isolierung gestellt, und es muss ferner ein Rückgang der isolierenden Eigenschaften infolge elektrophoretischer Phänomene im Boden und Befall der äusseren Wand der Rohre durch Wanderströme ausgeschlossen werden. In NL-A- 8 400 821 wurde dann ein Isolierverfahren für Stahlrohre beschrieben, wobei nicht vorbehandelte Rohre mit einer Gleitschicht aus Bitumen versehen werden, wonach man hohle Halbzylinder aus Polyurethanschaum, Kork, Glaswolle, Steinwolle, Calciumsilikat bezw. mit Silikon behandeltem expandiertem Glimmer um die Rohre legt.

Systematische Versuchsreihen in Zusammenwirkung mit empirischen Ergebnissen haben zur Entwicklung weiter verbesserter Materialkombinationen und des Anwendungsverfahrens geführt, wodurch Ergebnisse erzielt werden konnten, die noch grössere Dauerhaftigkeit der Isolation und derzufolge längere Gebrauchszeit der isolierten Rohre auch unter den schwersten klimatischen, thermischen, mechanischen, chemischen und Umweltsbelastungen zur Folge haben.

Für dieses Verfahren wird unter anderem geblasenes Bitumen mit einem Erweichungsgebiet um etwa 60°C mit expandierten Korkteilchen in durch andere Materialen geschützten Schichten verwendet.

Die Korkteilchen werden erhalten, indem die Rinde der Korkeiche (Quercus suber) gemahlen wird, das gemahlene Material zusammengepresst wird und auf bis etwa 300°C erhitzt wird.

Dadurch findet Expansion statt.

Das spezifische Gewicht nimmt von 200 g/l auf etwa 100 g/l ab, und der Wärmeleitungskoëffizient ist dann 0,035 W/m.K (gemessen mit der Heizdrahtmethode nach van der Held).

Dieses Produkt wird wiederum vermahlen, auf eine sehr homogene Teilchengrösseverteilung abgesiebt, und bei etwa 200°C zu kreissegmentförmigen Schalen gepresst.

Das spezifische Gewicht des so erhaltenen Materials ist etwa 860 g/l. Der Wärmeleitungskoëffizient dessen ist dann 0,118 W/m.K bei 20°C und 0,073 W/m.K bei 90°C.

Ferner werden Schichten von geblasenem Bitumen, feinmaschigem Glasgewebe, eine Aluminium-Polyäthylen-Kraftpapier-Kaschierungsfolie und Glaszwirnverfestigung für den Isolierungskörper verwendet.

Nach der vorliegenden Methode wird in der äussersten Schicht der Schalen bis etwa 60 Gew.-% der Korkteilchen ersetzt durch expandierte natürliche oder synthetische Silikate aus der Gruppe der Phyllosilikate (Mica, Glimmer, Perlit, Kalziumsilikat, Talkum), die eine plättchenförmige Struktur besitzen und als Körner eingesetzt werden.

Dieses Material sieht ähnlich wie Kunststoffgranulat aus und es kann für bestimmte Zwecke mit Kunststoffgranulat (Polystyrol, Polyurethan, Polyester) vermischt und verschnitten werden. Das Verfahren zur Isolierung von unterirdisch zu verlegenden Metallrohren für des Transport strömungsfähiger Stoffe, wobei die Rohre mit einer Schicht Bitumen versehen und mit hohlen Halbzylindern, welche gebundene Korkteilchen erhalten, verkleidet werden und in einer Schalung in flüssigem Bitumen, welches Kork enthält, eingegossen werden, ist erfindungsgemäss dadurch gekennzeichnet, dass man das Rohr (1) reinbürstet, darauf eine Schicht feinmaschigen Glasgewebes (2), getränkt mit geblasenem Bitumen, anbringt, dann mit den hohlen Halbzylindern (3) verkleidet, die aus gepressten expandierten Korkteilchen, gemischt mit blättchenförmigen Phyllosilikaten, bestehen, mit mehreren Schichten einer Aluminium-Polyäthylen-Kraftpapier-Kaschierungsfolie (5) umwickelt und schliesslich mit einem Gemisch von geblasenem Bitumen und 1 5 Gew.-% Korkstücken umgiesst.

Wenn mehrere Rohrleitungen nebeneinander liegen sollen, werden die Kreissegment-Schälen aus expandierten Teilchen jeweils an einer Seite sekantenförmig geradflächig bearbeitet und mit diesen Flächen gegen einander gelegt, wonach das Ganze in die Schalung eingebettet wird. Die Schalung kann aus Stahlblech oder Beton bestehen und sie kann an der Stelle verbleiben.

Es ist jedoch auch möglich, eine Schalung aus mit Kalk bestreutem Stahlblech nach der Verlegung und der Erstarrung des gegossenen Blocks wieder zu entfernen.

Die Schalung ist in den Fällen eine verlorene Schalung aus Stahlblech oder Beton, wo die mechanische Belastung der Oberfläche über der Rohrleitung dies erforderlich sein lässt, wie auf Werksgeländen, Parkplätzen, unter Strassen, Eisenbahnlinien usw.

An den Stellen wo Verzweigungen, Krümmer und Ventile in der Leitung vorkommen, werden zwecks seitlicher Verschiebung die Schalen ausgelassen und werden diese Stellen nur mit Bitumen-Kork mit den mineralischen Zuschlagstoffen eingegossen und unterstützt oder wird an Ort und Stelle Glas- oder Steinwolle verwendet.

Das erfindungsgemässe Erzeugnis wird näher an Hand der anliegenden Zeichnungen beschrieben.

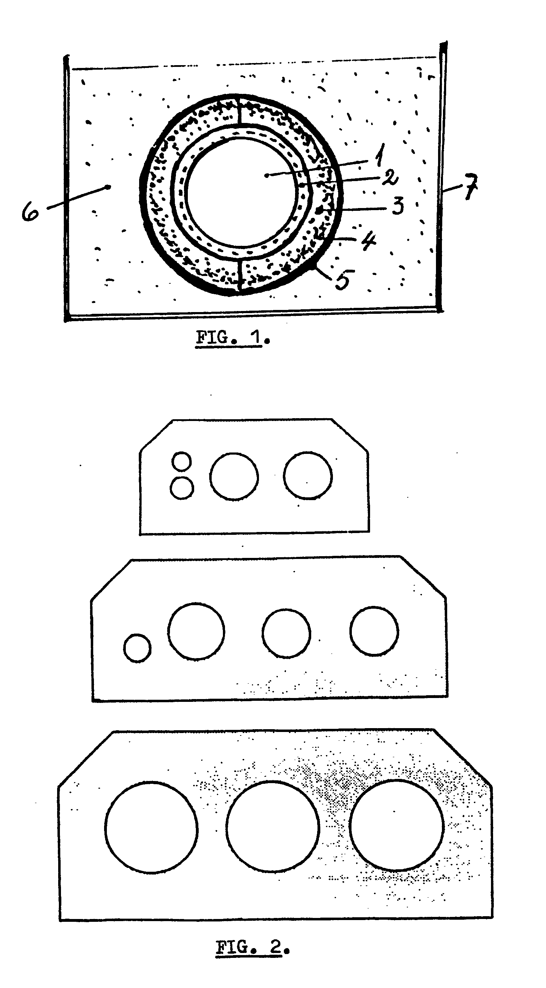

Figur 1 zeigt schematisch als Querschnitt die Teile der Isolierung gemäss der vorliegenden Erfindung.

Darin ist (1) das Rohr, (2) die Schicht feinmaschigen Glasgewebes mit geblasenem Bitumen, (3) die Schalen aus gepressten gebundenen Korkteilchen (4), Teil einer Schale mit Phyllosilikaten, (5) die Aluminium-Polyäthylen-Kraftpapier-kaschierungsfolie, während (6) der gegossene Block aus Bitumengiessmasse ist, welcher geformt ist in einer verlorenen oder verbleibenden Schalung (7) um das isolierte Rohr herum.

Die innerste Schicht aus geblasenem Bitumen bildet eine Gleitschicht, so dass Bewegung in Längsrichtung möglich ist, ohne dass Beschädigung auftritt.

Der Block schafft die Möglichkeit, dass auch einige Ausdehnung und Zusammenziehung in radialer Richtung möglich ist, weil er aus körnigem Material, zusammengehalten durch Bitumen, besteht, so dass dieses Material einigermassen bei Ausdehnung nachgeben kann.

Figur 2 zeigt Querschnitte verschiedener Typen von Blöcken mit mehreren Rohren.

Das Gemisch von geblasenem Bitumen und Füllmittel ist ein thermoplastisches Material und es hat keinen scharfen Schmelzpunkt, doch ein grosses Erweichungsgebiet.

Beim Erwärmen wird es langsam weicher, bis es in der wärmsten Zone flüssig ist.

Ein im Boden um ein Rohr angebrachter Block ist an der Aussenseite fest und hart.

Um das Rohr herum ist er beim Durchströmen eines warmen Stoffes durch das Rohr flüssig, so dass sich das Rohr bei thermischer Ausdehnung bewegen kann.

Das Material weicht entlang dem Rohr und fliesst wieder zusammen. Infolge der guten isolierenden Eigenschaften und der totalen Isolationsstärke von durchschnittlich etwa 100 mm ist der Temperaturgradient im Block erheblich, sodass die Aussenseite eine niedrige Temperatur hat. Mit diesem System wird ein im Boden fest ruhender kräftiger Block geschaffen, in welchem das Rohr sich frei ausdehnen kann ohne besondere mechanische Belastung des Rohrs, des Isoliermaterials und der umgebenden Bodenschichten, und welcher die grössten Verkehrsbelastungen ohne Probleme mit Sicherheit vertragen kann.

**Patentansprüche**

1. Verfahren zur Isolierung von unterirdisch zu verlegenden Metallrohren für den Transport strömender Stoffe, wobei die Rohre mit einer Schicht Bitumen versehen und mit hohlen Halbzylindern, welche gebundene Korkteilchen enthalten, verkleidet werden und in einer Schaltung in flüssigem Bitumen, welches Kork enthält, eingegossen werden, dadurch gekennzeichnet, dass man das Rohr (1) reinbürstet, darauf eine Schicht feinmaschigen Glasgewebes (2), getränkt mit geblasenem Bitumen, anbringt, dann mit den hohlen Halbzylindern (3) verkleidet, die aus gepressten expandierten Korkteilchen, gemischt mit blättchenförmigen Phyllosilikaten, bestehen, mit mehreren Schichten einer Aluminium-Polyäthylen-Kraftpapier-Kaschierungsfolie (5) umwickelt und schliesslich mit einem Gemisch von geblasenem Bitumen und 15 Gew.-% Korkstückchen umgiesst.

2. Isolation für unterirdisch zu verlegende Metallrohre mit einer Schicht Bitumen, die von gebundene Korkteilchen enthaltenden hohlen Halbzylindern umgeben ist, wobei die Halbzylinder von einem Kork enthaltenden Bitumen-Giessmassengemisch umgeben sind, dadurch gekennzeichnet, dass die Bitumenschicht durch ein mit geblasenem Bitumen getränktes feinmaschiges Glasgewebe (2) gebildet ist, dass die hohlen Halbzylinder (3) aus gepressten expandierten Korkteilchen, gemischt mit blättchenförmigen Phyllosilikaten, bestehen und mit mehreren Schichten einer Aluminium-Polyäthylen-Kraftpapier-Kaschierungsfolie (5) umwickelt sind, und dass das Giessmassengemisch (6) geblasenes Bitumen mit 15 Gew.-% Kork enthält.

3. Isolierte Rohrleitung, gekennzeichnet durch eine Isolation gemäss Anspruch 2.

## Claims

1. A working method for insulating subterranean pipelines of metal for transport of fluid substances, whereof said pipelines are to be provided with a layer of tar lined with hollow semicylinders containing bound cork particles and being coated with a casting of cork-containing asphalt, characterized in that the said pipe (1) is brushed, then a ply of small-mesh glass-woven fabric (2), impregnated with blown bitumen, is fixed and clad with said hollow semicylinders (3), which are composed of compressed and expanded cork particles, mixed with foliated phyllosilicates, then wrapped with several layers of a kraft-paper foil (5), coated with aluminium- and polyethene film, and ultimately surrounded with a casting of a mixture of blown bitumen with 15 wt.-% of small cork particles.

2. An insulation for subterranean metal pipelines, having a layer of tar scaled with holow semicylinders containing bound cork particles, whereof said semicylinders are surrounded with a cast mixed material of asphalt with cork, characterized in that said layer of asphalt material is formed of small-mesh glass-woven fabric (2), impregnated with blown bitumen, that the said hollow semicylinders (3) consist of compressed and expanded cork particles, mixed with foliated phyllo-silicates, wrapped with several layers of kraft-paper foil (5), coated with aluminium- and polyethene-film, and that said cast mixed material (6) contains blown bitumen with 15 wt.-% of cork.

3. An insulated pipeline, characterized by an insulation according to claim 2.

## Revendications

1. Un procédé d'isolation de tuyauteries métalliques à la mise en souterrain, pour le transport de substances courantes, dont lesdites tuyauteries sont pourvues d'une couche de goudron et d'un revêtement de demi-cylindres creux contenant de particules de liège agglutinées et que c'est coulé dans une couche d'asphalte contenant de liège, caractérisé en ce que l'on brosse le tuyau (1), puis une couche de tissu de verre à mailles fines (2) impregnée de bitume soufflé est appliquée, et enfermé de demi-cylindres creux (3) composés de particules de liège comprimées et dilatées, mélangées de phyllosilicates lamellaires, ensuite tout est enveloppé de plusieurs couches de papier kraft (5) enduites d'une pellicule d'aluminium et de polyéthylène, et enfin enrobé d'un mélange de bitume soufflé et de 15% en poids de morceaux de liège.

2. Une isolation pour les tuyauteries métalliques à la mise en souterrain, pourvues d'une couche de goudron et d'un revêtement de demi-cylindres creux contenant de particules de liège agglutinées, dont lesdits demi-cylindres sont enveloppés d'un mélange fondu d'asphalte et de liège, caractérisée en ce que ladite couche d'asphalte est formée d'un tissu de verre (2) à mailles fines impregné de bitume soufflé, que les demi-cylindres creux (3) sont composés de particules de liège comprimées et dilatées, mélangées de phyllosilicates lamellaires, et qu'ils sont enveloppés de plusieurs couches de papier kraft (5) enduites d'une pellicule d'aluminium et de polyéthylène, et que le mélange de matière de coulée (6) contient du bitume soufflé et 15% en poids de liège.

3. Conduite isolée caracterisée d'une isolation selon la revendication 2.

FIG. 1.

FIG. 2.